Europäisches Patentamt

European Patent Office

Office européen des brevets

(11) Publication number: **0 306 462**
**A2**

# EUROPEAN PATENT APPLICATION

(21) Application number: 88850277.0

(51) Int. Cl.⁴: **F 02 D 11/04**

(22) Date of filing: 24.08.88

(30) Priority: 04.09.87 SE 8703451

(43) Date of publication of application:
08.03.89 Bulletin 89/10

(84) Designated Contracting States:
CH DE FR GB IT LI

(71) Applicant: **STIGA AKTIEBOLAG**
**Box 1006**
**S-573 28 Tranäs (SE)**

(72) Inventor: **Engdahl, Lennart**
**Skylgatan 8**
**S-573 00 Tranas (SE)**

(74) Representative: **Nordén, Ake et al**
**AWAPATENT AB Box 7402**
**S-103 91 Stockholm (SE)**

(54) **Arrangement in a throttle control or the like.**

(57) The invention relates to an arrangement in a throttle control or the like, comprising an arcuate engagement surface (30) which is connected to a handle (23) and pivotable together therewith relative to a frame member (1, 2) and a guide and to which is fixed the end of a flexible element (5) connected to a wire or line (6) displaceable in a cable sleeve (7) rigidly fixed to the frame member, the end portion of the flexible element (5), whose end is fixed to the engagement surface (30), upon pivotment of the handle (23) with the engagement surface (30), being wound onto or unwound from said engagement surface and at the same time displaced in its longitudinal direction relative to said frame member (1, 2) and the cable (7) fixed thereto.

The novel features reside in that the engagement surface pivotal together with the handle (23) comprises two arcuate surface portions (30a, 30b), that the fixing point for the flexible element (5) is arranged to allow fixing said element such that it runs along one or the other of said surface portions, and that the frame member (1, 2) has guides (14a, 14b) allowing guiding said flexible element (5) towards one or the other of said surface portions.

FIG.1

**Description**

## ARRANGEMENT IN A THROTTLE CONTROL OR THE LIKE

The present invention relates to an arrangement of the type stated in the preamble of the main claim.

Throttle control devices comprising a lever pivotable about a shaft and having an arcuate engagement surface associated with a guide for an incoming pulling and/or pushing stiff wire, line or the like, are previously known in a large number of different designs. In lawn-mowers, rotary cultivators, rotary snow-ploughs and similar equipment, there is a long-felt want of standardization meaning that, irrespective of the make and type of machine, the lever should always be turned in one particular direction for increasing the motor speed and in the opposite direction for decreasing the motor speed. Also, the stop position should be identical in all types of machines.

Depending on the type and position of the motor and the type of carburettor, the throttle control is mounted sometimes to the right and sometimes to the left. Morever, in one type of carburettor, the control lever is so arranged that the motor speed will increase when the control lever of the carburettor throttle is moved outwards whereas, in another type of carburettor, the motor speed increases when the corrresponding control arm is moved inwards. As a result hereof, manufacturers making several different types of machines and also using different types of motors must keep at least four types of throttle controls in stock to be able to mount the controls either to the right or to the left and to have them fit on both types of carburettors.

The object of the invention is to provide a throttle control which is so arranged that it can be adjusted, in connection with mounting, for any desired location and for both types of carburettors or such like.

The distinctive features of the throttle control arrangement according to the invention are stated in the accompanying claims.

One embodiment of the arrangement according to the invention will be described in more detail hereinbelow with reference to the accompanying drawings, in which:

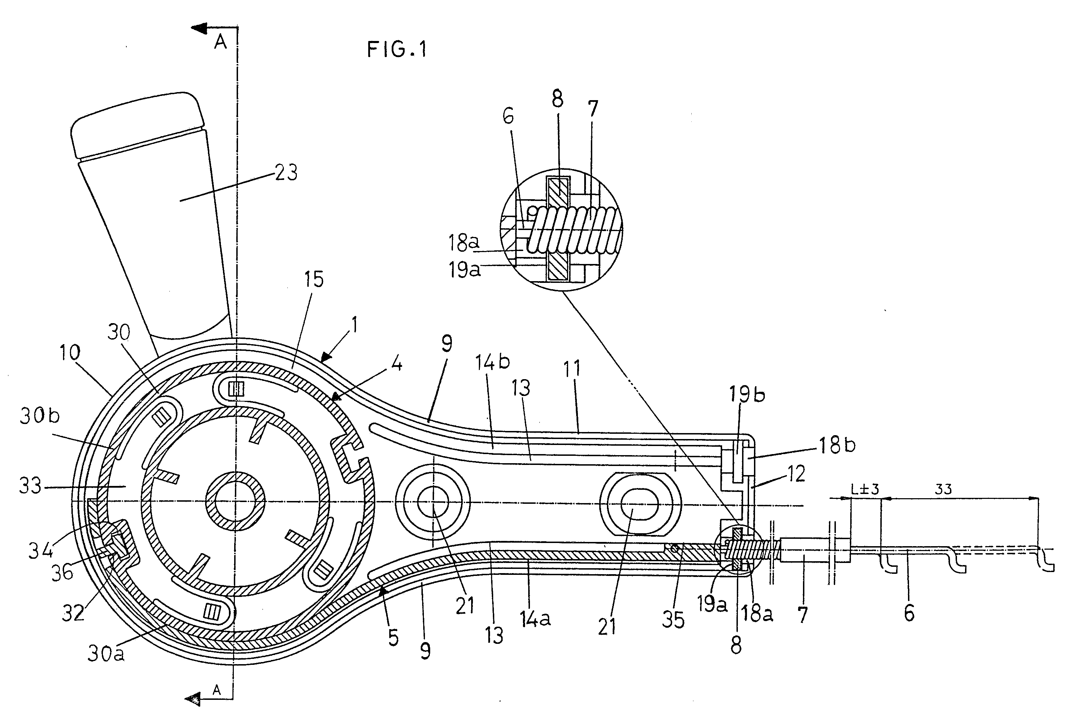

Fig. 1 is a part-sectional view showing a throttle control with a so-called cap member removed and

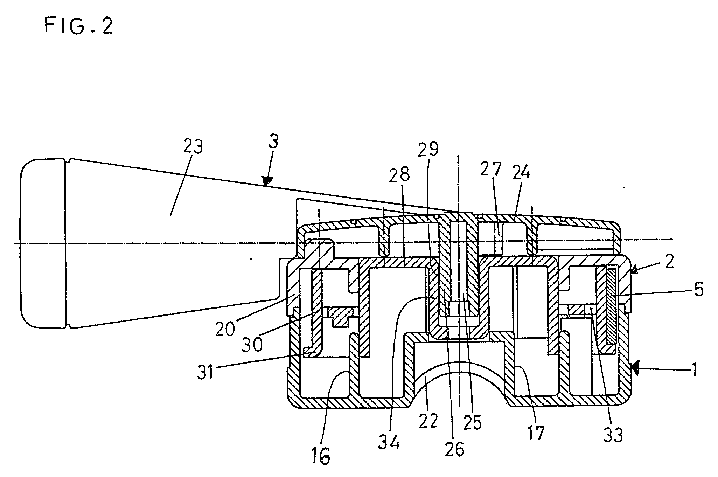

Fig. 2 is a cross-section of Fig. 1 taken along the line A-A.

The arrangement according to the invention comprises a frame member 1, a cap member 2, and a pivotal handle 3. A reel-shaped body rotatably mounted in the frame member is generally designated 4, a flexible element in the form of a strip or band mountable at the body 4 is designated 5, a power- transmitting wire or line 6, a cable sleeve 7, and a cable sleeve end washer, fixable to the frame member, is designated 8.

The frame member 1 and the cap member 2 have a curved portion 10 and a straight portion 11 projecting therefrom. The frame member has an outer wall 9 extending around the curved portion 10 and continuously passing along the associated straight portion 11 up to a transverse wall 12. Along the straight portion 11, there are provided, at some distance inwardly of the wall 9, ridges 13 extending on both sides along the outer wall 9 up to the point where it merges into the curved portion 10. Thus, between the outer wall 9 and said ridges there are defined guide grooves 14a and 14b, respectively, which are first straight and then curve, passing into a circular space 15 inwardly of the outer wall 9. In the curved portion 10, there are provided, spaced from the outer wall, an outer annular guide flange 16 and a centrally upwardly projecting portion 17 with a through bore. At the far end of the straight portion, there are provided in the transverse wall 12 two U-shaped recesses 18a, 18b each of which is intersected by a slot-shaped recess 19a and 19b, respectively.

The cap member 2 is basically designed in the same manner as the frame member and also has, at some distance inwardly of an outer wall 20, ridges which define between them and the wall 20 guide grooves which at the circular portion of the cap member merge into a circular recess in the curved portion of the cap member. The cap member also has an end wall provided with two U-shaped recesses with transverse, slot-shaped recesses. Through the straight portion, both of the frame member 1 and of the cap member 2, there are provided holes 21 for receiving fixing screws, and the frame member is provided on its outside with a longitudinal channel- shaped recess 22 forming an abutment for fixing the frame member on the handle bar of a lawn-mower or the like.

The handle 3 consists of the handle portion 23 proper and a disc 24 fixed thereto, from whose surface project a pin 26 having a threadable centre hole 25, and two driver lugs 27. The reel-shaped body 4 has a central portion 28 with a depression 29 in which the pin 26 of the handle disc 24 fits.

The reel-shaped body 4 has a substantially axial peripheral portion 30 with an edge flange 31, and transversely of the edge portion extends an axial slot 32 up to the edge flange. The peripheral portion 30 forms the engagement surface proper which is divided by the slot 32 into two opposite surface portions 30a and 30b. Inwardly of the peripheral portion, there is a radial supporting portion 33 having at the location of the slot, a recess 34 and connected to the substantially cup-shaped central portion 28 where the depression 29 is provided in an inwardly projecting pin 29'.

The flexible element or band 5, consisting of nylon or similar material, is resistant to traction and pressure. At one end of the band, there is a projection 35 which is provided for fixing the wire or line 6 and adjusted to the distance between the ridges 13 at the frame member and the cap member, respectively. At the opposite end of the band, there is provided a projection 36 which, as seen transversely of the longitudinal direction of the band, is T-shaped and has the same width as the band. The band 5 is fixed at the periphery 30 in that the stem portion of the projection 36 is inserted from the side into the slot 32 in the peripheral portion 30 of the reel-shaped body until it engages the edge flange 31. The head of the projection then is located inwardly of the peripheral portion 30 in the recess 34 of the radial portion 33.

Before assembly of the device, it is ensured that pivotal movement of the handle 23 away from the straight end portion 11 where the cable sleeve 7 is fixed results in an increase of the gas feed. It is thereafter established if the lever of the carburettor throttle is arranged to open the throttle when subjected to a pull or push action, and if the throttle control should be mounted to the right or to the left on the handle bar of the lawn-mower or the like.

If the throttle control should be placed on the inner side of the right-hand tube of the handle bar and the throttle lever of the carburettor should be pivoted outwards for opening the throttle and the handle should be directed upwards, the projection 36 of the band 5 is fixed in such a manner to the reel 4 that this can be inserted in the frame member 1 with the band at the illustrated surface portion 30a thereof, such that the free end of the band connected to the wire 6 will run in the illustrated lower guide grooves 14a in the frame member 1, the cable sleeve 7 being inserted in the opening which, at one side, is defined by the U-shaped recess 18a with the end washer 8 inserted in the associated slot 19a. When the cap member 2 has been mounted and the handle turned in the correct direction and its pin 26 inserted in dog holes (not shown), at the reel 4, the handle is locked by means of a screw passing through the frame member and the reel and into the pin of the handle.

If the carburettor is of the other type where the throttle lever should be pivoted inwards, the band 5 is quite simply fixed at the other side so as to run in the opposite guide 14b, the cable sleeve being fixed in the other U-shaped recesses. If assembly should be performed on the opposite side in the first case, the band 5 is placed in the then upper guide and the handle is reversed, and vice versa when carburettors according to the second case are used.

It is evident that the invention can be modified in many different ways in constructional respects without departing from the inventive concept.

The invention must therefore not be considered restricted to the embodiment described above and illustrated in the drawings, but may be modified in many different ways within the spirit and scope of the accompanying claims.

**Claims**

1. An arrangement in a throttle control or the like, comprising an arcuate engagement surface (30) which is connected to a handle (23) and pivotable together therewith relative to a frame member (1, 2) and a guide and to which is fixed the end of a flexible element (5) connected to a wire or line (6) displaceable in a cable sleeve (7) rigidly fixed to the frame member, the end portion of the flexible element (5), whose end is fixed to the engagement surface (30), upon pivotment of the handle (23) with the engagement surface (30), being wound onto or unwound from said engagement surface and at the same time displaced in its longitudinal direction relative to said frame member (1, 2) and the cable (7) fixed thereto, **characterized** in that the engagement surface pivotal together with the handle (23) comprises two arcuate surface portions (30a, 30b), that the fixing point for the flexible element (5) is arranged to allow fixing said element such that it runs along one or the other of said surface portions, and that the frame member (1, 2) has guides (14a, 14b) allowing guiding said flexible element (5) towards one or the other of said surface portions.

2. Arrangement as claimed in claim 1, **characterized** in that the frame member (1, 2) has two separate anchoring points (18a, 19a - 18b, 19b) for the cable (7) and, extending from each of said points, a guide (14a, 14b) for the flexible element (5).

3. Arrangement as claimed in claim 1 or 2, **characterized** in that the handle (23) is detachably and reversibly connected to a reel-shaped body (4) provided with said separate arcuate surfaces.

4. Arrangement as claimed in claim 2, **characterized** in that the frame member consists of two complementarily shaped parts (1 and 2) formed with inwardly facing grooves (14a, 14b) which are positioned opposite each other and together form the guides for the flexible element (5).

5. Arrangement as claimed in claim 1, **characterized** in that the flexible element consists of a strip or band (5) of a flexible material which is resistant to tensile and pressure stresses, and that there are provided at the ends of said band an attachment for the wire or line (6) and a projection (36) arranged to lockingly engage in a recess (32) separating the arcuate engagement portions.

FIG.1

FIG.2

EP 0 306 462 A2